# FASCICULE DE BREVET EUROPEEN

(11) **EP 4 623 456 B1**
(45) Date de publication et mention de la délivrance du brevet: **02.09.2026**
(21) Numéro de dépôt: 23813449.8
(22) Date de dépôt: 13.11.2023
(51) Int. Cl.: H01H 9/32, H01H 9/10

(54) **CONTACTEUR DE PUISSANCE A ECRAN DE CLARIFICATION D'ARC ELECTRIQUE ET AERONEF COMPORTANT UN TEL CONTACTEUR DE PUISSANCE**
LEISTUNGSSCHÜTZ MIT LICHTBOGENREINIGUNGSSCHIRM UND FLUGZEUG MIT SOLCH EINEM LEISTUNGSSCHÜTZ
POWER CONTACTOR HAVING AN ELECTRIC ARC CLARIFICATION SCREEN, AND AIRCRAFT COMPRISING SUCH A POWER CONTACTOR

(30) Priorité: 21.11.2022 FR 2212104
(43) Date de publication de la demande: 01.10.2025
(73) Titulaire: Safran Electrical & Power, 31702 Blagnac (FR)
(72) Inventeur: GUILLARD, Eric, 77550 MOISSY-CRAMAYEL (FR)
(74) Mandataire: Gevers & Orès
(86) Numéro de dépôt international: PCT/FR2023/051777
(87) Numéro de publication internationale: WO 2024/110715

(56) Documents cités:
- WO-A1-85/05218
- US-A1- 2022 085 577
- US-B1- 6 590 489

## Description

### Domaine technique de l'invention

La présente invention concerne un contacteur de puissance à écran de clarification d'arc électrique, ainsi qu'un aéronef comportant un tel contacteur de puissance.

Comme cela est connu en soi, un contacteur de puissance est un appareil électrotechnique conçu pour sélectivement établir ou bien interrompre le passage d'un courant, à partir d'une commande à distance, par exemple électrique ou pneumatique.

### Arrière-plan technologique

Les avions à décollage et atterrissage vertical (de l'anglais « Vertical Take Off and Landing » également désignés par l'acronyme VTOL) et les avions conventionnels (de l'anglais « Conventional Take Off and Landing », également désignés par l'acronyme CTOL) à propulsion électriques ou hybride constituent un marché avec des perspectives et une demande importantes dans le transport intra urbain et inter urbain pour des marchandises ou des personnes.

La propulsion de ces différentes plateformes est réalisée par un ou plusieurs moteurs électriques, le nombre variant suivant les architectures des aéronefs. Ces systèmes propulsifs électriques utilisent des niveaux de tension continue toujours plus élevés.

Les modes de pannes de ces systèmes montrent que l'apparition d'un arc électrique série peut avoir des conséquences sérieuses sur les structures avion si ce dernier n'est pas clarifié (c'est-à-dire arrêté).

Or, un arc électrique survient généralement entre chaque paire de contact mobile / contact fixe d'un contacteur de puissance. Si ces arcs électriques restaient en place, ils pourraient entraîner un départ de feu. C'est pour cela qu'un dispositif de soufflage d'arc est généralement associé au contacteur de puissance. Néanmoins, si le soufflage d'arc est défaillant, l'arc électrique peut provoquer un départ de feu.

Par ailleurs, il est connu de déplacer un écran isolant électrique entre les deux contacts fixe/mobile à chaque séparation de ces derniers, voir par exemple la demande internationale publiée sous le numéro WO 1985 005218 A1. L'insertion de l'écran entre les deux contacts fait disparaitre l'arc électrique. Cependant, un chemin carboné risque d'apparaître et de se renforcer à chaque utilisation de l'écran, le rendant progressivement inopérant.

Il peut ainsi être souhaité de prévoir un contacteur de puissance qui permette de s'affranchir d'au moins une partie des problèmes et contraintes précités.

Le document US6590489 décrit un dispositif selon le préambule de la revendication 1.

### Résumé de l'invention

Il est donc proposé un contacteur de puissance comportant :
- un contact fixe ;
- un contact mobile conçu pour se déplacer par rapport au contact fixe entre une position au contact du contact fixe pour permettre un passage de courant et une position éloignée du contact fixe pour empêcher le passage de courant ; et
- un écran isolant électrique conçu pour se déplacer entre une position écartée et une position intercalée entre le contact fixe et le contact mobile dans sa position éloignée ;
- un dispositif de rappel conçu pour pousser l'écran de sa position écartée vers sa position intercalée ; et
- un fusible formant butée mécanique empêchant l'écran de quitter sa position écartée, le fusible étant conçu pour se déclencher afin de laisser l'écran quitter sa position écartée pour atteindre sa position intercalée sous l'effet du dispositif de rappel, sous l'effet d'une chaleur dégagée par un arc électrique apparaissant entre le contact fixe et le contact mobile.

L'invention peut en outre comporter l'une ou plusieurs des caractéristiques optionnelles suivantes, selon toute combinaison techniquement possible.

De préférence, le contacteur de puissance comporte en outre : - un autre contact fixe ; et - un autre contact mobile conçu pour se déplacer par rapport à l'autre contact fixe entre une position au contact de l'autre contact fixe pour permettre un passage de courant et une position éloignée de l'autre contact fixe pour empêcher le passage de courant, les deux contacts mobiles étant fixés l'un à l'autre de manière à se déplacer en même temps.

De préférence également, l'écran est sous la forme d'une plaque, de préférence perpendiculaire à une direction de fermeture selon laquelle le contact mobile se déplace entre sa position écartée et sa position intercalée.

De préférence également, l'écran comporte en outre une barre omnibus à laquelle le contact fixe est fixé, et le fusible est fixé sur la barre omnibus.

De préférence également, le fusible a la forme d'un pion, s'élevant de préférence parallèlement à la direction de fermeture.

De préférence également, le dispositif de rappel comporte un ressort.

De préférence également, le ressort est en extension entre un point fixe et l'écran.

De préférence également, le contacteur de puissance comporte en outre un dispositif de soufflage d'un arc électrique apparaissant entre le contact fixe et le contact mobile.

Il est également proposé un aéronef comportant un contacteur selon l'invention.

### Brève description des figures

L'invention sera mieux comprise à l'aide de la description qui va suivre, donnée uniquement à titre d'exemple et faite en se référant aux dessins annexés dans lesquels :
- la figure 1 est une vue en trois dimensions d'un exemple d'un contacteur de puissance selon l'invention,
- la figure 2 est un schéma-bloc d'un exemple de procédé de fonctionnement du contacteur de puissance de la figure 1,
- la figure 3 est une vue comme celle de la figure 1, avec des arcs électriques représentés, et
- la figure 4 est une vue en trois dimensions du contacteur de puissance de la figure 1, après déclenchement d'un écran de clarification d'un arc électrique.

### Description détaillée de l'invention

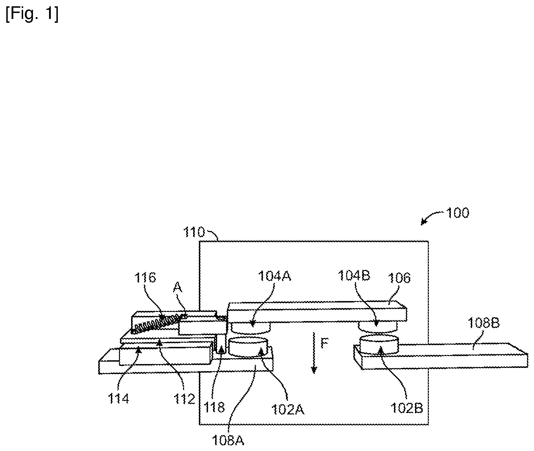

En référence à la figure 1, un exemple d'un contacteur de puissance 100 selon l'invention va à présent être décrit.

Le contacteur de puissance 100 comporte au moins une paire de deux contacts, l'un 102A, 102B étant fixe et l'autre 104A, 104B étant mobile. Le contact mobile 104A, 104B est ainsi conçu pour se déplacer par rapport au contact fixe 102A, 102B entre une position au contact du contact fixe 102A, 102B pour permettre un passage de courant et une position éloignée du contact fixe 102A, 102B pour empêcher le passage de courant. Le déplacement se fait par exemple en ligne droite, suivant une direction de fermeture F.

Par exemple, le contacteur de puissance 100 est à double coupure, comme dans l'exemple illustré, et comporte deux paires de contacts fixe 102A, 102B et mobile 104A, 102B. Dans ce cas, les deux contacts mobiles 104A, 104B sont fixés l'un à l'autre de manière à se déplacer en même temps. Par exemple, le contacteur de puissance 100 comporte une barre omnibus mobile 106 présentant deux extrémités où les deux contacts mobiles 104A, 104B sont respectivement fixés. Ainsi, les deux contacts mobiles 104A, 104B sont conçus pour se déplacer en même temps, avec la barre omnibus 106, selon la direction de fermeture F pour venir au contact, sensiblement au même instant, de leur contact fixe 102 associé.

Le contacteur de puissance 100 peut en outre comporter, pour chaque contact fixe 102A, 102B, une barre omnibus fixe 108A, 108B à laquelle ce contact fixe 102A, 102B est fixé.

Le contacteur de puissance 100 peut en outre comporter un dispositif 110 de soufflage d'un arc électrique apparaissant entre chaque contact mobile 104A, 104B et le contact fixe 102A, 102B associé, en particulier lors de l'ouverture du contacteur de puissance 100. Le dispositif de soufflage 110 est conçu pour déplacer et faire disparaître l'arc électrique. Le déplacement de l'arc électrique est par exemple obtenu en appliquant un champ magnétique et sa disparition est par exemple obtenue en divisant l'arc électrique en plusieurs arcs électriques plus petits.

Le contacteur de puissance 100 comporte en outre un écran isolant électrique 112 associé à une paire de contact fixe/mobile (la paire 102A, 104A dans l'exemple illustré). L'écran 112 est conçu pour se déplacer entre une position écartée, dans laquelle l'écran 112 permet le déplacement du contact mobile 104A, et une position intercalée entre le contact fixe 102A et le contact mobile 104A dans sa position éloignée pour empêcher le contact mobile 104A d'atteindre sa position au contact du contact fixe 102A. L'écran 112 est par exemple sous le forme d'une plaque, par exemple perpendiculaire à la direction de fermeture F. Ainsi, lorsque l'écran 112 en position écartée, les contacts 102A, 104A peuvent sélectivement être éloignés l'un de l'autre et mis au contact l'un avec l'autre suivant les commandes reçues par le contacteur de puissance 100. En outre, on comprend bien que l'écran 112 est conçu, alors que le contact mobile 104A est déjà en position écartée du contact fixe 102A suite à la réception d'une commande d'ouverture, pour être déplacé de sa position écartée à sa position intercalée, afin de couper un arc électrique qui serait apparu entre les contacts 102A, 104A éloignés l'un de l'autre.

L'écran 112 est de préférence choisi en matériau isolant électrique avec un CTI (de l'anglais « Comparative Tracking Index ») élevé, par exemple au moins 500 V, par exemple de 600 V, afin d'éviter l'apparition d'un chemin carboné susceptible de réamorcer l'arc électrique.

Par exemple, l'écran 112 est conçu pour se déplacer en ligne droite, par exemple perpendiculairement à la direction de fermeture F. Pour guider le déplacement de l'écran 112, le contacteur de puissance 100 comporte par exemple une glissière 114 de guidage de l'écran 112.

Le contacteur de puissance 100 comporte en outre un dispositif de rappel 116 conçu pour pousser l'écran 112 de sa position écartée vers sa position intercalée. Par exemple, le dispositif de rappel 116 comporte un ressort par exemple en extension entre un point fixe A (par exemple de la glissière 114) et l'écran 112. Alternativement, le ressort pourrait être en compression.

Le contacteur de puissance 100 comporte en outre un fusible 118 formant une butée mécanique pour l'écran 112, empêchant ce dernier de quitter sa position écartée, malgré l'effort fourni par le dispositif de rappel 116 à l'écran 112. Le fusible 118 est conçu pour se déclencher sous l'effet d'une chaleur dégagée par un arc électrique apparaissant entre le contact fixe 102A et le contact mobile 104A. Suite à son déclenchement, le fusible 118 est conçu pour se désagréger et perdre ainsi sa fonction de butée afin de laisser l'écran 112 quitter sa position écartée pour atteindre sa position intercalée sous l'effet du dispositif de rappel 116. Le fusible 118 est par exemple fixé sur la barre omnibus fixe 108. Toujours par exemple, le fusible 118 a la forme d'un pion s'élevant de préférence parallèlement à la direction de fermeture F. Le fusible 118 est par exemple réalisé dans un alliage d'étain. Il présente une température de déclenchement (également appelée température de fusion), par exemple comprise entre 200°C et 250°C, par exemple 230°C.

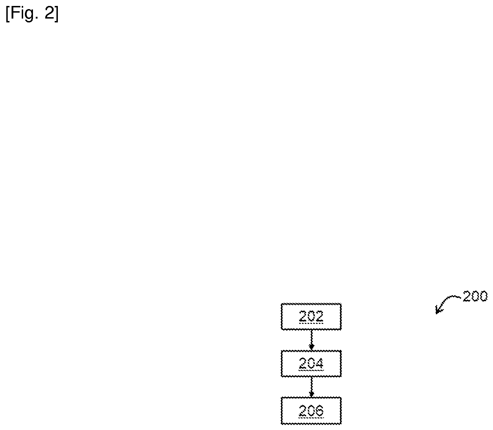

En référence à la figure 2, un exemple d'un procédé 200 de fonctionnement du contacteur de puissance 100 de la figure 1, va à présent être décrit.

Initialement, le contacteur de puissance 100 est fermé. Les contacts mobiles 104A, 104B sont respectivement au contact des contacts fixes 102A, 102B. Ainsi, un courant passe de la manière suivante : par la barre omnibus fixe 108A, puis le contact fixe 102A, puis le contact mobile 104A, puis la barre omnibus mobile 106, puis le contact mobile 104B, puis le contact fixe 102B, puis la barre omnibus fixe 108B.

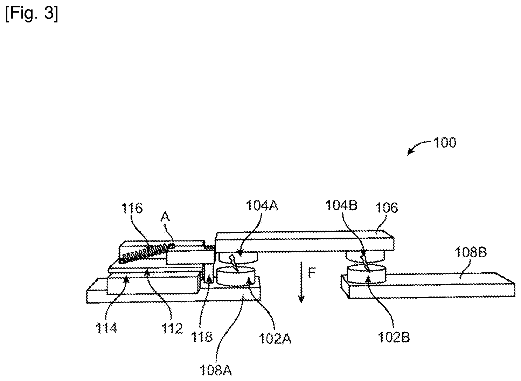

Au cours d'une étape 202, le contacteur de puissance est ouvert. Les contacts mobiles 104A, 104B s'éloignent des contacts fixes 102A, 102B. Des arcs électriques apparaissent alors entre le contact mobile et le contact fixe de respectivement chaque paire, comme cela est illustré sur la figure 3. Ces arcs électriques génèrent de la chaleur. En particulier, une partie de la chaleur générée par l'arc électrique entre le contact mobile 104A, et le contact fixe 102A se diffuse par conduction dans le contact fixe 102A, puis dans la barre omnibus fixe 108A, jusqu'à atteindre le fusible 118 qui s'échauffe.

En fonctionnement normal du contacteur de puissance 100, ces arcs devraient être soufflés par le dispositif de soufflage 110, avant que la température du fusible n'ait atteint son seuil de déclenchement.

Au cours d'une étape 204, lorsque les arcs électriques se maintiennent trop longtemps, par exemple plus de quelques dizaines de millisecondes, par exemple à cause d'une défaillance du dispositif de soufflage 110, la température du fusible 118 atteint le seuil et le fusible 118 se déclenche et se désagrège. Il libère de ce fait l'écran 112.

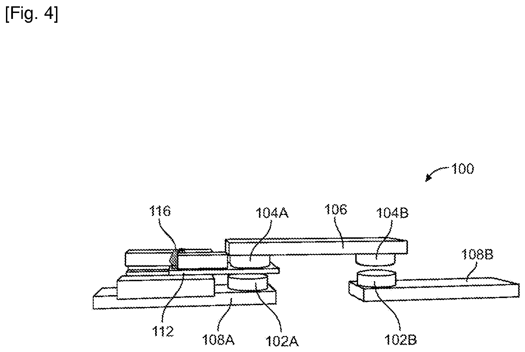

Ainsi, au cours d'une étape 206, le dispositif de rappel 116 pousse l'écran 112 de sa position éloignée à sa position intercalée entre le contact mobile 104A et le contact fixe 102A, tel qu'illustré sur la figure 4. L'élongation brutale de l'arc électrique à cause de l'écran 112 crée une impédance d'arc suffisante pour que la force contre électromotrice de l'arc série s'oppose à la tension du réseau jusqu'à couper le courant.

## Revendications

1. Contacteur de puissance (100) comportant :
- un contact fixe (102A) ;
- un contact mobile (104A) conçu pour se déplacer par rapport au contact fixe (102A) entre une position au contact du contact fixe (102A) pour permettre un passage de courant et une position éloignée du contact fixe (102A) pour empêcher le passage de courant ; et
- un écran (112) isolant électrique conçu pour se déplacer entre une position écartée et une position intercalée entre le contact fixe (102A) et le contact mobile (104A) dans sa position éloignée ;
- un dispositif de rappel (116) conçu pour pousser l'écran (112) de sa position écartée vers sa position intercalée ; et **caractérisé par**
- un fusible (118) formant butée mécanique empêchant l'écran (112) de quitter sa position écartée, le fusible (118) étant conçu pour se déclencher afin de laisser l'écran (112) quitter sa position écartée pour atteindre sa position intercalée sous l'effet du dispositif de rappel (116), sous l'effet d'une chaleur dégagée par un arc électrique apparaissant entre le contact fixe (102A) et le contact mobile (104A).

2. Contacteur de puissance (100) selon la revendication 1, comportant en outre :
- un autre contact fixe (102B) ; et
- un autre contact mobile (104B) conçu pour se déplacer par rapport à l'autre contact fixe (102B) entre une position au contact de l'autre contact fixe (102B) pour permettre un passage de courant et une position éloignée de l'autre contact fixe (102B) pour empêcher le passage de courant, les deux contacts mobiles (104A, 104B) étant fixés l'un à l'autre de manière à se déplacer en même temps.

3. Contacteur de puissance (100) selon la revendication 1 ou 2, dans lequel l'écran (112) est sous la forme d'une plaque, de préférence perpendiculaire à une direction de fermeture (F) selon laquelle le contact mobile (104A) se déplace entre sa position écartée et sa position intercalée.

4. Contacteur de puissance (100) selon l'une quelconque des revendications 1 à 3, comportant en outre une barre omnibus (108A) à laquelle le contact fixe (102A) est fixé, et dans lequel le fusible (118) est fixé sur la barre omnibus (108A).

5. Contacteur de puissance (100) selon l'une quelconque des revendications 1 à 4, dans lequel le fusible (118) a la forme d'un pion, s'élevant de préférence parallèlement à la direction de fermeture (F).

6. Contacteur de puissance (100) selon l'une quelconque des revendications 1 à 5, dans lequel le dispositif de rappel (116) comporte un ressort.

7. Contacteur de puissance (100) selon la revendication 6, dans lequel le ressort est en extension entre un point fixe (A) et l'écran (112).

8. Contacteur de puissance (100) selon l'une quelconque des revendications 1 à 7, comportant en outre un dispositif de soufflage (110) d'un arc électrique apparaissant entre le contact fixe (102A) et le contact mobile (104A).

9. Aéronef comportant un contacteur selon l'une quelconque des revendications 1 à 8.

## Patentansprüche

1. Leistungsschütz (100), umfassend:
- einen feststehenden Kontakt (102A);
- einen beweglichen Kontakt (104A), der so konzipiert ist, dass er sich in Bezug auf den feststehenden Kontakt (102A) bewegt zwischen einer Position in Kontakt mit dem feststehenden Kontakt (102A), um einen Stromdurchgang zu ermöglichen, und einer von dem feststehenden Kontakt (102A) entfernten Position, um den Stromdurchgang zu verhindern; und
- einen elektrisch isolierenden Schirm (112), der so konzipiert ist, dass er sich zwischen einer beabstandeten Position und einer Position bewegt, in der er zwischen dem feststehenden Kontakt (102A) und dem beweglichen Kontakt (104A) in dessen entfernter Position eingefahren ist;
- eine Rückstellvorrichtung (116), die so konzipiert ist, dass sie den Schirm (112) aus seiner beabstandeten Position in seine eingefahrene Position drückt; und **gekennzeichnet durch**
- eine Sicherung (118), die einen mechanischen Anschlag bildet, der verhindert, dass der Schirm (112) seine beabstandete Position verlässt, wobei die Sicherung (118) so konzipiert ist, dass sie unter der Wirkung einer Wärme, die durch einen zwischen dem feststehenden Kontakt (102A) und dem beweglichen Kontakt (104A) auftretenden Lichtbogen freigesetzt wird, auslöst, um den Schirm (112) seine beabstandete Position verlassen zu lassen, sodass er unter der Wirkung der Rückstellvorrichtung (116) seine eingefahrene Position erreicht.

2. Leistungsschütz (100) nach Anspruch 1, weiter umfassend:
- einen weiteren feststehenden Kontakt (102B); und
- einen weiteren beweglichen Kontakt (104B), der so konzipiert ist, dass er sich in Bezug auf den weiteren feststehenden Kontakt (102B) bewegt zwischen einer Position in Kontakt mit dem weiteren feststehenden Kontakt (102B), um einen Stromdurchgang zu ermöglichen, und einer von dem weiteren feststehenden Kontakt (102B) entfernten Position, um den Stromdurchgang zu verhindern, wobei die zwei beweglichen Kontakte (104A, 104B) so aneinander befestigt sind, dass sie sich gleichzeitig bewegen.

3. Leistungsschütz (100) nach Anspruch 1 oder 2, wobei der Schirm (112) in Form einer Platte vorliegt, vorzugsweise senkrecht zu einer Schließrichtung (F), entlang derer sich der bewegliche Kontakt (104A) zwischen seiner beabstandeten Position und seiner eingefahrenen Position bewegt.

4. Leistungsschütz (100) nach einem der Ansprüche 1 bis 3, der weiter eine Sammelschiene (108A) umfasst, an der der feststehende Kontakt (102A) befestigt ist, und wobei die Sicherung (118) an der Sammelschiene (108A) befestigt ist.

5. Leistungsschütz (100) nach einem der Ansprüche 1 bis 4, wobei die Sicherung (118) die Form eines Stifts aufweist, der vorzugsweise parallel zur Schließrichtung (F) verläuft.

6. Leistungsschütz (100) nach einem der Ansprüche 1 bis 5, wobei die Rückstellvorrichtung (116) eine Feder umfasst.

7. Leistungsschütz (100) nach Anspruch 6, wobei die Feder zwischen einem festen Punkt (A) und dem Schirm (112) gespannt ist.

8. Leistungsschütz (100) nach einem der Ansprüche 1 bis 7, der weiter eine Ausblasvorrichtung (110) für einen zwischen dem feststehenden Kontakt (102A) und dem beweglichen Kontakt (104A) auftretenden Lichtbogen umfasst.

9. Luftfahrzeug, das ein Schütz nach einem der Ansprüche 1 bis 8 umfasst.

## Claims

1. A power contactor (100) comprising:
- a fixed contact (102A);
- a movable contact (104A) designed to move relative to the fixed contact (102A) between a position in contact with the fixed contact (102A) to allow current to pass and a remote position from the fixed contact (102A) to prevent current from passing; and
- an electrically insulating screen (112) designed to move between a spaced apart position from and a position interposed between the fixed contact (102A) and the movable contact (104A) in its remote position;
**characterized by**:
- a return device (116) designed to push the screen (112) from its spaced apart position to its interposed position; and
- a fuse (118) forming a mechanical stop preventing the screen (112) from leaving its spaced apart position, the fuse (118) being designed to trip in order to allow the screen (112) to leave its spaced apart position to reach its interposed position under the effect of the return device (116), under the effect of heat generated by an electric arc appearing between the fixed contact (102A) and the movable contact (104A).

2. The power contactor (100) according to claim 1, further comprising:
- another fixed contact (102B); and
- another movable contact (104B) designed to move relative to the other fixed contact (102B) between a position in contact with the other fixed contact (102B) to allow current to pass and a remote position from the other fixed contact (102B) to prevent current from passing, the two movable contacts (104A, 104B) being fixed to each other so as to move at the same time.

3. The power contactor (100) according to claim 1 or 2, wherein the screen (112) is in the form of a plate, preferably perpendicular to a closing direction (F) wherein the movable contact (104A) moves between its spaced apart position and its interposed position.

4. The power contactor (100) according to any one of claims 1 to 3, further comprising a busbar (108A) to which the fixed contact (102A) is fixed, and wherein the fuse (118) is fixed on the busbar (108A).

5. The power contactor (100) according to any one of claims 1 to 4, wherein the fuse (118) is in the form of a pin, preferably rising parallel to the closing direction (F).

6. The power contactor (100) according to any one of claims 1 to 5, wherein the return device (116) comprises a spring.

7. The power contactor (100) according to claim 6, wherein the spring is extended between a fixed point (A) and the screen (112).

8. The power contactor (100) according to any one of claims 1 to 7, further comprising a blowing device (110) of an electric arc appearing between the fixed contact (102A) and the movable contact (104A).

9. An aircraft comprising a contactor according to any one of claims 1 to 8.
